# FASCICULE DE BREVET EUROPEEN

(11) **EP 3 827 972 B1**
(45) Date de publication et mention de la délivrance du brevet: **17.01.2024**
(21) Numéro de dépôt: 20208170.9
(22) Date de dépôt: 17.11.2020
(51) Int. Cl.: B29C 65/08, B29C 65/00, B29C 65/78, B29C 51/00

(54) **PROCÉDÉ DE FABRICATION D'UNE PIÈCE THERMOPLASTIQUE COMPOSITE ET PIÈCE OBTENUE**
VERFAHREN ZUR HERSTELLUNG EINES THERMOPLASTISCHEN VERBUNDWERKSTOFFTEILS, UND SO ERHALTENES TEIL
METHOD FOR PRODUCING A THERMOPLASTIC COMPOSITE PART AND PART OBTAINED

(30) Priorité: 26.11.2019 FR 1913220
(43) Date de publication de la demande: 02.06.2021
(73) Titulaire: SMRC Automotive Holdings Netherlands B.V., 1101 BA Amsterdam (NL)
(72) Inventeur: BOULAL, Jilali, 59000 Lille (FR); ARUFAS, Ramon, 59251 Allenes les Marais (FR)
(74) Mandataire: Cabinet Nuss

(56) Documents cités:
- WO-A1-94/27805
- GB-A- 2 163 702
- JP-A- S6 255 121
- US-A1- 2016 185 037

## Description

La présente invention concerne le domaine de la fabrication de pièces composites par assemblage d'au moins deux corps, éléments ou parties fabriquées séparément, en particulier la réalisation de pièces composites à base de corps en matières thermoplastiques solidarisées rigidement entre elles par soudure.

L'invention vise notamment, mais non limitativement, les pièces de revêtement ou d'habillage intérieur pour véhicules automobiles, et notamment les tableaux de bord intégrant un ou des dispositif(s) de coussin d'air gonflable.

L'invention a pour objet, de manière générale, un procédé de fabrication d'une pièce composite et plus particulièrement d'un tableau de bord, ainsi qu'un tableau de bord obtenu par le biais de ce procédé.

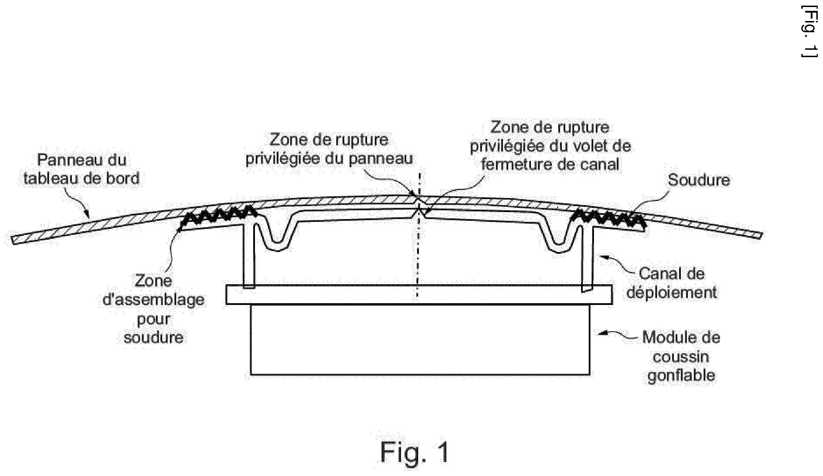

[Fig. 1] est une vue schématique partielle en coupe d'un exemple de tableau de bord traditionnel intégrant un coussin d'air gonflable de sécurité (« airbag ») sous-jacent (cf. par exemple : FR 3 007 346). On remarque notamment que le canal de déploiement est assemblé avec le panneau par soudure au niveau d'une zone d'interface de contact et d'assemblage, généralement autour du col de l'ouverture de sortie du canal de déploiement.
[Fig. 2A],
[Fig. 2B],
[Fig. 2C],

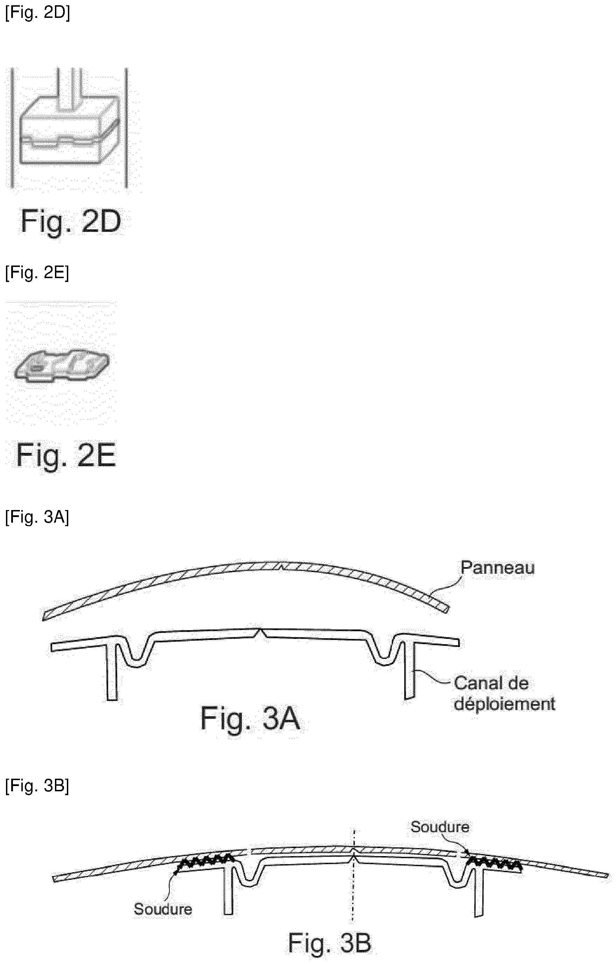

[Fig. 2D] et
[Fig. 2E] illustrent schématiquement un exemple de fabrication du panneau par thermoformage à partir d'un feutre ou mat non tissé mixte, par exemple constitué d'un mélange de fibres de renfort, notamment de fibres naturelles, et de fibres thermoplastiques, notamment en polypropylène.

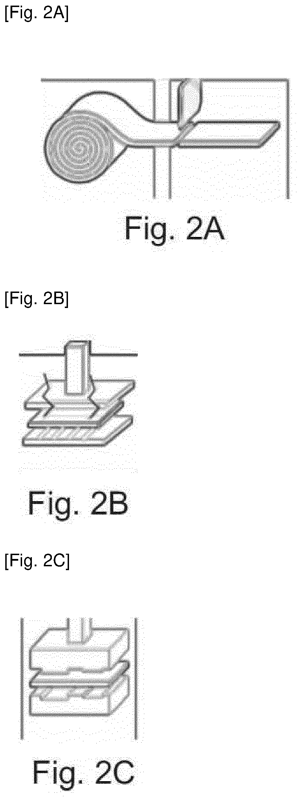

Plus précisément, un pan de feutre ou mat non tissé mixte est découpé à partir d'un rouleau (figure 2A), puis chauffé entre deux plaques (figure 2B : par exemple pendant 60 s, à 200-210° C, sous 5 bars dans un four de chauffage par contact), ensuite comprimé à l'état préchauffé dans un moule de thermoformage, par exemple sous 10 bars à 20° C (figures 2C et 2D) et enfin démoulé (figure 2E).

Le panneau thermoformé (formant à lui seul le tableau de bord ou au moins le substrat de ce dernier) est mis en présence d'un corps injecté formant canal de déploiement et fabriqué séparément ([Fig. 3A]) et ces deux corps sont assemblés par soudure au niveau de zones d'assemblage coopérantes mises en regard, préférentiellement par soudure sans apport de matière ([Fig. 3B]) : la soudure forme une bande périphérique entourant l'ouverture de déploiement du coussin).

Un exemple de production de tableau de bord avec dispositif de coussin d'air intégré est par exemple décrit et représenté dans FR 2 975 649. Le document US 2016/185037 divulgue le procédé d'assemblage d'un thermoplastique et d'un thermodurcissable par compression et laminage.

Dans certaines configurations de choix de matériaux constitutifs, il peut arriver que la matière thermoplastique formant le canal de déploiement (par exemple un mélange de polymères du type PP/SEBS ou PP/EPDM, choisi pour sa ductilité et sa flexibilité, permettant de résister aux contraintes lors du déploiement du coussin d'air à températures basses, élevées et tempérées), ne soit pas suffisamment compatible avec le matériau thermoplastique constituant ou intégré dans le panneau (par exemple panneau thermoformé à partir d'un non tissé mixte fibres végétales/fibres PP), pour aboutir à une liaison par soudure suffisamment résistante dans le contexte précité.

Dans une telle configuration de matériaux insuffisamment compatibles entre eux, un assemblage suffisamment robuste pour autoriser le déploiement sans endommagement et sans projection de débris, ne peut être garanti.

Par le document US 6 797 089, on connaît déjà, dans le domaine des garnitures ou pavillons de toit pour véhicules automobiles, un mode d'assemblage de deux panneaux identiques par soudure par friction ou vibrations, dans lequel une couche intermédiaire compatible avec les deux couches à assembler est prévu pour permettre la soudure. Cette couche intermédiaire peut être fixée par collage ou soudure à l'un des panneaux avant assemblage.

Il en résulte une phase opératoire additionnelle qui renchérit le coût de production, nécessite éventuellement un poste particulier et entraîne un traitement spécifique d'une partie au moins du panneau concerné (modifiant éventuellement la constitution de ce dernier par rapport à un procédé de fabrication sans cette phase opératoire additionnelle).

Le but essentiel de l'invention est par conséquent de proposer un procédé de fabrication d'une pièce composite par assemblage par soudure de deux corps, dont l'un au moins est réalisé par thermoformage, avec un nombre de phases opératoires limité et sans perturber, ni complexifier le cycle de production habituel.

A cet effet, elle a pour objet un procédé de fabrication d'une pièce composite, notamment d'un panneau intérieur de véhicule automobile, et en particulier d'un panneau de tableau de bord pour véhicule automobile avec un dispositif de coussin d'air gonflable, ladite pièce composite comprenant un corps principal en forme de panneau et un corps secondaire solidarisé sur l'une des faces dudit panneau, ledit procédé consistant essentiellement à fabriquer séparément les corps principal et secondaire, le corps principal étant obtenu par thermoformage ou thermocompression d'un pan de matériau en plaque ou feuille à base de matière thermoplastique, puis à assembler les deux corps entre eux par soudure sans matière d'apport, notamment par vibrations, au niveau de zones d'assemblage respectives mises en contact mutuel sous pression,
procédé caractérisé
en ce qu'il consiste à réaliser le corps principal et le corps secondaire avec utilisation de matières thermoplastiques différentes, faiblement compatibles ou incompatibles entre elles,
en ce qu'il consiste à fournir et à disposer au moins au niveau de la ou de chaque zone d'assemblage du pan de matériau destiné à former le corps principal, une couche d'interfaçage à base de ou intégrant une matière thermoplastique compatible avec celle du corps secondaire,
en ce qu'il consiste à solidariser ladite ou chaque couche d'interfaçage avec le corps principal durant une phase de pré-assemblage durant l'opération de thermoformage ou de thermocompression du pan de matériau, et
en ce que l'opération de soudure est paramétrée et configurée, notamment en termes de température, de pression et de durée pour aboutir à une liaison matière après plastification entre la ou chaque couche d'interfaçage et la zone d'assemblage concernée du corps secondaire en contact avec elle.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 4A],
[Fig. 4B],
[Fig. 4C],
[Fig. 4D] et
[Fig. 4E] illustrent schématiquement des phases opératoires consécutives de production d'un premier corps en forme de panneau par thermoformage d'un pan de feutre ou mat non tissé prédécoupé ;
[Fig. 5A] et
[Fig. 5B] sont des vues en perspective (5A) et en coupe (5B), à des échelles différentes, d'un panneau obtenu avec le procédé des figures 4, et
[Fig. 6A] et
[Fig. 6B] sont des vues en coupe partielles illustrant les phases d'assemblage d'un second corps avec le premier corps des figures 5.

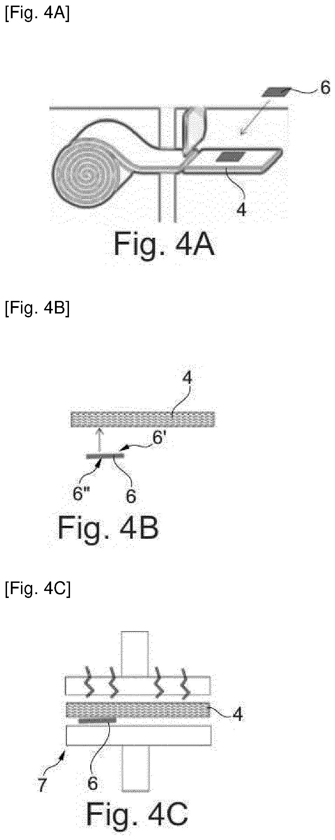

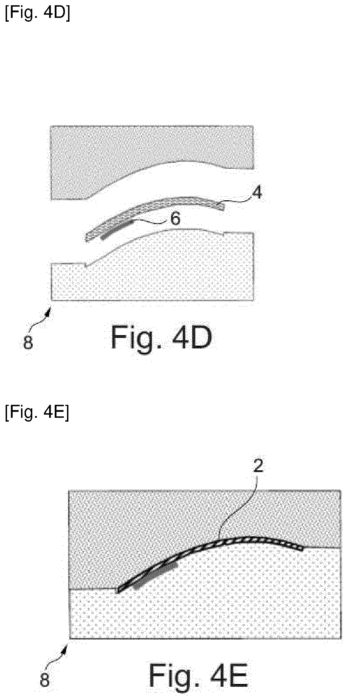

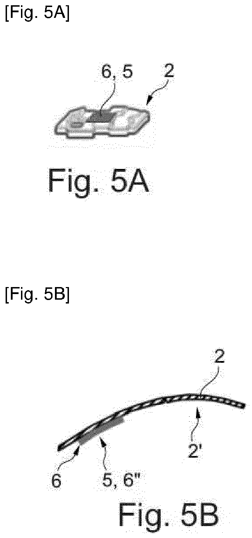

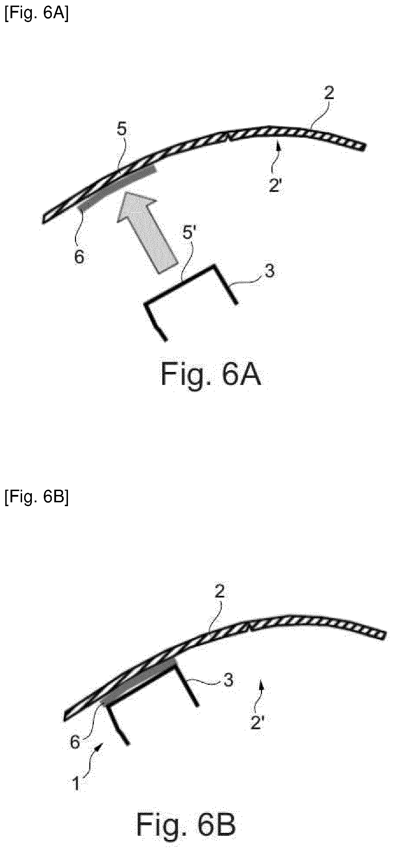

Les figures 4, 5 et 6 illustrent, de manière schématique un procédé de fabrication d'une pièce composite 1, notamment d'un panneau intérieur de véhicule automobile, et en particulier d'un panneau de tableau de bord pour véhicule automobile avec un dispositif de coussin d'air gonflable, ladite pièce composite 1 comprenant un corps principal 2 en forme de panneau et un corps secondaire 3 solidarisé sur l'une 2' des faces dudit panneau 2.

Ce procédé consiste essentiellement à fabriquer séparément les corps principal 2 et secondaire 3, le corps principal 2 étant obtenu par thermoformage ou thermocompression d'un pan 4 de matériau en plaque ou feuille à base de matière thermoplastique (par exemple non tissé mixte fibres naturelles/fibres thermoplastiques), puis à assembler les deux corps 2 et 3 entre eux par soudure sans matière d'apport, notamment par vibrations, au niveau de zones d'assemblage 5, 5' respectives mises en contact mutuel sous pression.

Conformément à l'invention, le procédé consiste :
- à réaliser le corps principal 2 et le corps secondaire 3 avec utilisation de matières thermoplastiques différentes, faiblement compatibles ou incompatibles entre elles,
- à fournir et à disposer au moins au niveau de la ou de chaque zone d'assemblage 5 du pan de matériau 4 destiné à former le corps principal 2, une couche d'interfaçage 6 à base de ou intégrant une matière thermoplastique compatible avec celle du corps secondaire 3,
- à solidariser ladite ou chaque couche d'interfaçage 6 avec le corps principal 3 durant une phase de pré-assemblage durant l'opération de thermoformage ou de thermocompression du pan de matériau 4.

De plus, l'opération de soudure est paramétrée et configurée, notamment en termes de température, de pression et de durée pour aboutir à une liaison matière après plastification entre la ou chaque couche d'interfaçage 6 et la zone d'assemblage 5' concernée du corps secondaire 3 en contact avec elle.

Grâce à l'invention, il est donc possible de fabriquer une pièce composite 1 telle qu'évoquée précédemment, avec une liaison robuste et résistante mécaniquement entre les deux corps 2 et 3 mutuellement assemblés, ce sans perturber le procédé de fabrication actuel (figures 2 et 3), ni le ralentir ou le complexifier notablement.

L'invention tire profit de l'étape de thermoformage ou de thermocompression pour simultanément solidariser la ou chaque couche d'interfaçage 6 (feuille, film, non tissé ou analogue découpé(e) à la forme de la zone d'assemblage 5 correspondante du corps principal 2) avec ledit corps principal 2. Cette solidarisation 6-2 obtenue durant le thermoformage ou la thermocompression peut, le cas échéant, être parfaite ou finalisée lors de l'opération de soudure (assemblage des corps 2 et 3).

Comme évoqué ci-dessus, on entend par matières « faiblement compatibles ou incompatibles » deux matières thermoplastiques dont les natures et caractéristiques différentes ne permettent pas de réaliser un assemblage par soudure, ou alors un assemblage qui n'est pas suffisamment ferme et rigide pour répondre aux exigences de résistance aux contraintes et sollicitations associées à l'application considérée.

Afin d'éviter un déplacement ou la perte de la couche d'interfaçage 4 mise en place sur le pan 4, par exemple durant sa manipulation en vue de son installation dans le four de préchauffage 7, puis dans le moule 8 de thermoformage ou de thermocompression, il peut être prévu de réaliser une fixation de la ou de chaque couche d'interfaçage 6 sur le pan de matériau 4 avant l'étape de thermoformage ou de thermocompression.

Selon une première variante, cette fixation avant thermoformage ou thermocompression de la ou chaque couche d'interfaçage 6 est une fixation temporaire ou provisoire par simple contact, par exemple par collage ou accrochage, suffisante pour garantir un maintien en position de cette ou ces couche(s) 6 sur le pan de matériau 4 jusqu'à sa solidarisation matière définitive lors de l'étape de thermoformage ou de thermocompression. Cette fixation peut être de nature adhésive, électrostatique ou résulter d'un entrelacement de fibres superficielles entre le voile de la couche 6 et le feutre du pan 4.

Selon une seconde variante, cette fixation avant thermoformage de la ou chaque couche d'interfaçage 6 avec le pan de matériau 4 correspond à une première phase ou à une phase préparatoire d'un procédé de solidarisation définitive en deux phases du ou des couches 6 avec le pan 4, parachevé lors de la phase de thermoformage ou de thermocompression (en fin de cycle de fabrication). Cette fixation peut alors être obtenue par aiguilletage, par engagement mutuel de gaufrages complémentaires réalisés par compression, et/ou par collage suite à la plastification ou fusion superficielle de la couche 6 ou du pan 4.

En accord avec un mode de réalisation préféré de l'invention, le pan de matériau 4 en plaque ou en feuille formant le précurseur ou l'ébauche (à thermoformer ou à thermocomprimer) du corps principal 2 consiste en une portion de feutre ou mat non tissé constitué d'un mélange sensiblement homogène de fibres de renfort, préférentiellement naturelles, notamment végétales, et de fibres de matière thermoplastique, notamment de polypropylène, et la ou chaque couche d'interfaçage 6 consiste en une portion de voile ou de feutre non tissé, découpée à la forme de la zone d'assemblage 5 concernée et constituée de fibres de matière thermoplastique compatible avec ou similaire à la matière thermoplastique du corps secondaire 3 et présentant, préférentiellement, un degré de compatibilité avec la matière thermoplastique du corps principal 2 supérieur à celui du matériau thermoplastique du corps secondaire 3. Le choix de la matière de la couche d'interfaçage 6 constitue dans ce dernier cas un compromis optimisé à la portée de l'homme du métier spécialisé dans les matières thermoplastiques.

En vue d'une possible amélioration de la fonction de solidarisation de la couche d'interfaçage 6, par optimisation de la compatibilité en termes de matières de cette couche avec chacun des deux corps, il peut être envisagé que la ou chaque couche d'interfaçage 6 présente une constitution au moins bimatière, avec une répartition de matières thermoplastiques telle qu'elle définit, d'une part, une première face 6' permettant par plastification l'établissement d'une bonne liaison matière avec le corps principal 2, déjà lors de la phase de pré-assemblage ou d'une première phase d'un procédé de solidarisation, et, d'autre part, une seconde face 6" permettant par plastification l'établissement d'une bonne liaison matière avec le corps secondaire 3 lors de la phase d'assemblage (à la fin de l'opération de thermoformage ou de thermocompression).

Typiquement, la matière constitutive de chacune des deux faces ou strates de la couche 6 considérée est favorablement compatible avec, et préférentiellement identique, à celle du corps 2 ou 3 avec lequel elle est assemblée.

La couche d'interfaçage 6 peut présenter, vue en coupe, soit une structure laminée à deux ou plusieurs strates de matières différentes, superposées, et mutuellement accolées ou soudées, soit une structure d'un seul tenant faisant état d'une variation de matière progressive entre les deux faces 6' et 6", avec un gradient de variation de composition de matière qui peut être de nature progressive et continue, ou alors par degrés ou paliers discrets.

Eventuellement, cette couche 6 peut intégrer une structure de renfort spécifique du type grille ou non tissé.

Lorsque la couche d'interfaçage 6 intermédiaire considérée est en non tissé, la fixation avant thermoformage entre, d'une part, la ou chaque couche d'interfaçage 6 en voile ou feutre non tissé et, d'autre part, le pan 4 de feutre ou mat non tissé constituant l'ébauche du corps principal 2 peut être une fixation par liaison mécanique obtenue par aiguilletage traversant des deux voiles ou feutres superposés ou par engagement mutuel de formations complémentaires imprimées dans les deux voiles ou feutres.

Afin de conférer au pan de feutre ou mat non tissé 4, et donc au corps principal 2, des propriétés additionnelles utiles, notamment une résistance augmentée aux contraintes, en particulier dans la région de la ou des zone(s) d'assemblage 5, le procédé peut en outre consister à intégrer dans ou à rapporter sur le corps principal 2, au moins au niveau de sa ou d'une de ses zones d'assemblage 5, au moins une autre couche intermédiaire à propriétés spécifiques, par exemple une couche de renforcement, d'accrochage ou analogue, cette intégration intervenant avant ou durant l'opération de thermoformage ou de thermocompression et la ou les couche(s) intermédiaire(s) additionnelle(s) résultante(s) étant située(s) sous la couche d'interfaçage 6 (non représenté).

Préférentiellement, et notamment lorsqu'elle consiste en un voile ou feutre non tissé de fibres polypropylènes, la ou chaque couche d'interfaçage 6 présente, avant réalisation de l'opération de thermoformage ou de thermocompression, une épaisseur comprise entre 0,5 et 3,0 mm, préférentiellement entre 1 et 2 mm, et un poids compris entre 50 et 1000 g/mm², préférentiellement entre 100 et 500 g/mm².

Le procédé selon l'invention est particulièrement bien adapté à la réalisation de pièces composites tridimensionnelles ou volumiques, le corps principal et le corps secondaire pouvant l'un et/ou présenter une forme tridimensionnelle ou au moins non plane.

Conformément à une application préférée de l'invention, ressortant des figures 4 à 6, le corps principal 2 correspond au substrat d'un panneau de tableau de bord et le ou chaque corps secondaire 3 correspond au canal de déploiement d'un coussin d'air gonflable.

L'invention vise également un panneau de tableau de bord 1 pourvu d'au moins un dispositif de coussin d'air gonflable.

Ce panneau est caractérisé en ce qu'il est fabriqué selon le procédé évoqué ci-dessus, le substrat du panneau 2 et le corps 3 formant le canal de déploiement du ou de chaque dispositif de coussin d'air gonflable étant relié(s) rigidement entre eux au niveau de zones d'assemblage 5 et 5' avec interposition d'au moins une couche d'interfaçage 6.

## Revendications

1. Procédé de fabrication d'un panneau intérieur composite (1) de véhicule automobile, et en particulier d'un panneau de tableau de bord pour véhicule automobile avec un dispositif de coussin d'air gonflable, ladite pièce composite (1) comprenant un corps principal (2) en forme de panneau et un corps secondaire (3) solidarisé sur l'une (2') des faces dudit panneau (2), ledit procédé consistant à fabriquer séparément les corps principal (2) et secondaire (3), le corps principal (2) étant obtenu par thermoformage ou thermocompression d'un pan (4) de matériau en plaque ou feuille à base de matière thermoplastique, puis à assembler les deux corps (2 et 3) entre eux par soudure sans matière d'apport, notamment par vibrations, au niveau de zones d'assemblage (5, 5') respectives mises en contact mutuel sous pression,
procédé **caractérisé**
**en ce qu'**il consiste à réaliser le corps principal (2) et le corps secondaire (3) avec utilisation de matières thermoplastiques différentes, faiblement compatibles ou incompatibles entre elles,
**en ce qu'**il consiste à fournir et à disposer au moins au niveau de la ou de chaque zone d'assemblage (5) du pan de matériau (4) destiné à former le corps principal (2), une couche d'interfaçage (6) à base de ou intégrant une matière thermoplastique compatible avec celle du corps secondaire (3),
**en ce qu'**il consiste à solidariser ladite ou chaque couche d'interfaçage (6) avec le corps principal (2) durant une phase de pré-assemblage durant l'opération de thermoformage ou de thermocompression du pan de matériau (4), et
**en ce que** l'opération de soudure est paramétrée et configurée, notamment en termes de température, de pression et de durée pour aboutir à une liaison matière après plastification entre la ou chaque couche d'interfaçage (6) et la zone d'assemblage (5') concernée du corps secondaire (3) en contact avec elle.

2. Procédé selon la revendication 1, **caractérisé en ce qu'**il consiste à réaliser une fixation de la ou de chaque couche d'interfaçage (6) sur le pan de matériau (4) avant l'étape de thermoformage ou de thermocompression.

3. Procédé selon la revendication 2, **caractérisé en ce que** la fixation avant thermoformage de la ou chaque couche d'interfaçage (6) est une fixation temporaire ou provisoire par simple contact, par exemple par collage ou accrochage, suffisante pour garantir un maintien en position de cette ou ces couche(s) (6) sur le pan de matériau (4) jusqu'à sa solidarisation matière définitive lors de l'étape de thermoformage ou de thermocompression.

4. Procédé selon la revendication 2 ou 3, **caractérisé en ce que** la fixation avant thermoformage de la ou chaque couche d'interfaçage (6) avec le pan de matériau (4) correspond à une première phase ou à une phase préparatoire d'un procédé de solidarisation définitive en deux phases du ou des couches (6) avec le pan (4), parachevé lors de la phase de thermoformage ou de thermocompression.

5. Procédé selon l'une quelconque des revendications 1 à 4, **caractérisé en ce que** le pan de matériau (4) en plaque ou en feuille formant le précurseur ou l'ébauche à thermoformer ou à thermocomprimer du corps principal (2) consiste en une portion de feutre ou mat non tissé constitué d'un mélange sensiblement homogène de fibres de renfort, préférentiellement naturelles, notamment végétales, et de fibres de matière thermoplastique, notamment de polypropylène, et ce que la ou chaque couche d'interfaçage (6) consiste en une portion de voile ou de feutre non tissé, découpée à la forme de la zone d'assemblage (5) concernée et constituée de fibres de matière thermoplastique compatible avec ou similaire à la matière thermoplastique du corps secondaire (3) et présentant, préférentiellement, un degré de compatibilité avec la matière thermoplastique du corps principal (2) supérieur à celui du matériau thermoplastique du corps secondaire (3).

6. Procédé selon l'une quelconque des revendications 1 à 5, **caractérisé en ce que** la ou chaque couche d'interfaçage (6) présente une constitution au moins bimatière, avec une répartition de matières thermoplastiques telle qu'elle définit, d'une part, une première face (6') permettant par plastification l'établissement d'une bonne liaison matière avec le corps principal (2), déjà lors de la phase de pré-assemblage ou d'une première phase d'un procédé de solidarisation, et, d'autre part, une seconde face (6") permettant par plastification l'établissement d'une bonne liaison matière avec le corps secondaire (3) lors de la phase d'assemblage.

7. Procédé selon la revendication 5 ou 6, lorsqu'elle dépend de l'une quelconque des revendications 3 et 4, **caractérisé en ce que** la fixation avant thermoformage entre, d'une part, la ou chaque couche d'interfaçage (6) en voile ou feutre non tissé et, d'autre part, le pan (4) de feutre ou mat non tissé constituant l'ébauche du corps principal (2) est une fixation par liaison mécanique obtenue par aiguilletage traversant des deux voiles ou feutres superposés ou par engagement mutuel de formations complémentaires imprimées dans les deux voiles ou feutres.

8. Procédé selon l'une quelconque des revendications 1 à 7, **caractérisé en ce qu'**il consiste à intégrer dans ou à rapporter sur le corps principal (2), au moins au niveau de sa ou d'une de ses zones d'assemblage (5), au moins une autre couche intermédiaire à propriétés spécifiques, par exemple une couche de renforcement, d'accrochage ou analogue, cette intégration intervenant avant ou durant l'opération de thermoformage ou de thermocompression et la ou les couche(s) intermédiaire(s) additionnelle(s) résultante(s) étant située(s) sous la couche d'interfaçage (6).

9. Procédé selon l'une quelconque des revendications 1 à 8, **caractérisé en ce que** la ou chaque couche d'interfaçage (6) présente, avant réalisation de l'opération de thermoformage ou de thermocompression, une épaisseur comprise entre 0,5 et 3,0 mm, préférentiellement entre 1 et 2 mm, et un poids compris entre 50 et 1000 g/mm², préférentiellement entre 100 et 500 g/mm².

10. Procédé selon l'une quelconque des revendications 1 à 9, **caractérisé en ce que** le corps principal (2) correspond au substrat d'un panneau de tableau de bord et ce que le ou chaque corps secondaire (3) correspond au canal de déploiement d'un coussin d'air gonflable.

11. Panneau de tableau de bord pourvu d'au moins un dispositif de coussin d'air gonflable, **caractérisé en ce qu'**il est fabriqué selon le procédé de la revendication 10, le substrat du panneau (2) et le corps (3) formant le canal de déploiement du ou de chaque dispositif de coussin d'air gonflable étant relié(s) rigidement entre eux au niveau de zones d'assemblage (5 et 5') avec interposition d'au moins une couche d'interfaçage (6).

## Patentansprüche

1. Verfahren zur Herstellung einer Verbundwerkstoff-Innentafel (1) für ein Kraftfahrzeug und insbesondere einer Instrumententafel für ein Kraftfahrzeug mit einer Airbagvorrichtung, wobei das Verbundwerkstoffteil (1) einen tafelförmigen Hauptkörper (2) und einen Nebenkörper (3), der mit der einen (2') der Seiten der Tafel (2) verbunden ist, umfasst, wobei das Verfahren darin besteht, den Hauptkörper (2) und den Nebenkörper (3) getrennt herzustellen, wobei der Hauptkörper (2) durch Thermoformen oder Thermokompression einer platten- oder folienartigen Materialbahn (4) auf der Basis von thermoplastischem Material erhalten wird, dann die beiden Körper (2 und 3) durch Schweißen ohne Zusatzwerkstoff, insbesondere durch Vibrationen, an jeweiligen Fügebereichen (5, 5'), die wechselseitig unter Druck in Kontakt gebracht werden, zusammenzufügen,
wobei das Verfahren **dadurch gekennzeichnet ist,**
**dass** es darin besteht, den Hauptkörper (2) und den Nebenkörper (3) unter Verwendung von unterschiedlichen, schwach kompatiblen oder untereinander inkompatiblen thermoplastischen Materialien auszuführen,
**dass** es darin besteht, mindestens an dem oder jedem Fügebereich (5) der Materialbahn (4), die dazu bestimmt ist, den Hauptkörper (2) zu bilden, eine Grenzflächenschicht (6) vorzusehen oder bereitzustellen, die auf einem thermoplastischen Material basiert oder ein thermoplastisches Material beinhaltet, das zu dem des Nebenkörpers (3) kompatibel ist,
**dass** es darin besteht, die oder jede Grenzflächenschicht (6) mit dem Hauptkörper (2) während einer Vorfügephase während des Thermoformungs- oder Thermokompressionsvorgangs der Materialbahn (4) zu verbinden, und
**dass** der Schweißvorgang parametriert und konfiguriert ist, insbesondere im Hinblick auf Temperatur, Druck und Zeit, um nach Plastifizierung zwischen der oder jeder Grenzflächenschicht (6) und dem betreffenden Fügebereich (5') des Nebenkörpers (3), der mit ihr in Kontakt ist, eine stoffliche Verbindung zu erhalten.

2. Verfahren nach Anspruch 1, **dadurch gekennzeichnet, dass** es darin besteht, eine Fixierung der oder jeder Grenzflächenschicht (6) auf der Materialbahn (4) vor dem Thermoformungs- oder Thermokompressionsschritt auszuführen.

3. Verfahren nach Anspruch 2, **dadurch gekennzeichnet, dass** die Fixierung der oder jeder Grenzflächenschicht vor dem Thermoformen (6) eine temporäre oder provisorische Fixierung durch einfachen Kontakt, zum Beispiel durch Kleben oder Anhaften, ist, die ausreicht, um ein Halten dieser Schicht(en) (6) an Ort und Stelle auf der Materialbahn (4) bis zu ihrem endgültigen stofflichen Verbinden beim Thermoformungs- oder Thermokompressionsschritt zu garantieren.

4. Verfahren nach Anspruch 2 oder 3, **dadurch gekennzeichnet, dass** die Fixierung vor dem Thermoformen der oder jeder Grenzflächenschicht (6) mit der Materialbahn (4) einer ersten Phase oder einer vorbereitenden Phase eines Verfahrens zum endgültigen Verbinden in zwei Phasen der Schicht oder Schichten (6) mit der Bahn (4) entspricht, das bei der Thermoformungs- oder Thermokompressionsphase abgeschlossen wird.

5. Verfahren nach einem der Ansprüche 1 bis 4, **dadurch gekennzeichnet, dass** die platten- oder folienartige Materialbahn (4), die den zu thermoformenden oder zu thermokomprimierenden Vorläufer oder Rohling des Hauptkörpers (2) bildet, aus einem Abschnitt aus Filz oder nicht gewebter Matte besteht, der bzw. die aus einer im Wesentlichen homogenen Mischung aus Verstärkungsfasern, bevorzugt natürlichen, insbesondere pflanzlichen, und aus Fasern aus thermoplastischem Material, insbesondere aus Polypropylen, besteht, und dadurch, dass die oder jede Grenzflächenschicht (6) aus einem Abschnitt aus Vlies oder nicht gewebtem Filz besteht, der auf die Form des betreffenden Fügebereichs (5) zugeschnitten ist und aus Fasern aus thermoplastischem Material besteht, das zu dem thermoplastischen Material des Nebenkörpers (3) kompatibel ist oder dazu ähnlich ist und, bevorzugt, einen Kompatibilitätsgrad zu dem thermoplastischen Material des Hauptkörpers (2) aufweist, der größer als der des thermoplastischen Materials des Nebenkörpers (3) ist.

6. Verfahren nach einem der Ansprüche 1 bis 5, **dadurch gekennzeichnet, dass** die oder jede Grenzflächenschicht (6) eine Zusammensetzung aus mindestens zwei Materialien aufweist, mit einer derartigen Verteilung von thermoplastischen Materialien, dass sie zum einen eine erste Seite (6') definiert, die durch Plastifizierung das Aufbauen einer guten stofflichen Verbindung mit dem Hauptkörper (2) bereits bei der Vorfügephase oder einer ersten Phase eines Verbindungsverfahrens ermöglicht, und zum anderen eine zweite Seite (6"), die durch Plastifizierung das Aufbauen einer guten stofflichen Verbindung mit dem Nebenkörper (3) bei der Fügephase ermöglicht.

7. Verfahren nach Anspruch 5 oder 6, wenn abhängig von einem der Ansprüche 3 und 4, **dadurch gekennzeichnet, dass** die Fixierung vor dem Thermoformen zwischen der oder jeder Grenzflächenschicht (6) aus Vlies oder nicht gewebtem Filz zum einen und der Bahn (4) aus Filz oder nicht gewebter Matte, die den Rohling des Hauptkörpers (2) darstellt, zum anderen eine Fixierung durch mechanische Verbindung ist, die durch durchgehende Vernadelung der beiden übereinander liegenden Vliese oder Filze oder durch wechselseitigen Eingriff von komplementären Formationen, die in die beiden Vliese oder Filze eingeprägt sind, erhalten wird.

8. Verfahren nach einem der Ansprüche 1 bis 7, **dadurch gekennzeichnet, dass** es darin besteht, mindestens an seinem oder einem seiner Fügebereiche (5) mindestens eine weitere Zwischenschicht mit spezifischen Eigenschaften in den Hauptkörper (2) zu integrieren oder auf den Hauptkörper aufzutragen, zum Beispiel eine Verstärkungs-, Haft- oder ähnliche Schicht, wobei diese Integration vor oder während des Thermoformungs- oder Thermokompressionsvorgangs erfolgt und die resultierende(n) zusätzliche(n) Zwischenschicht(en) unter der Grenzflächenschicht (6) gelegen ist(sind).

9. Verfahren nach einem der Ansprüche 1 bis 8, **dadurch gekennzeichnet, dass** die oder jede Grenzflächenschicht (6) vor dem Ausführen des Thermoformungs- oder Thermokompressionsvorgang eine Dicke zwischen 0,5 und 3,0 mm, bevorzugt zwischen 1 und 2 mm, und ein Gewicht zwischen 50 und 1000 g/mm², bevorzugt zwischen 100 und 500 g/mm², aufweist.

10. Verfahren nach einem der Ansprüche 1 bis 9, **dadurch gekennzeichnet, dass** der Hauptkörper (2) dem Substrat einer Instrumententafel entspricht und dass der oder jeder Nebenkörper (3) dem Entfaltungskanal eines Airbags entspricht.

11. Instrumententafel, die mit mindestens einer Airbagvorrichtung versehen ist, **dadurch gekennzeichnet, dass** sie nach dem Verfahren des Anspruchs 10 hergestellt ist, wobei das Substrat der Tafel (2) und der Körper (3), der den Entfaltungskanal der oder jeder Airbagvorrichtung bildet, an Fügebereichen (5 und 5') mit mindestens einer dazwischen angeordneten Grenzflächenschicht (6) starr untereinander verbunden sind.

## Claims

1. Method for manufacturing a composite inner panel (1) for a motor vehicle, and in particular a dashboard panel for a motor vehicle with an airbag device, said composite part (1) comprising a panel-shaped main body (2) and a secondary body (3) connected to one (2') of the faces of said panel (2), said method involving manufacturing the main body (2) and the secondary body (3) separately, the main body (2) being obtained by thermoforming or thermocompression of a section (4) of plate or sheet material based on thermoplastic material, then assembling the two bodies (2 and 3) together by welding with no filler material, notably by vibration, in the respective assembly zones (5, 5') brought into mutual contact under pressure,
said method being **characterized**
**in that** it involves making the main body (2) and the secondary body (3) using different thermoplastic materials that are not very or not at all compatible with one another,
**in that** it involves providing and arranging, at least in the or each assembly zone (5) of the section (4) of material intended to form the main body (2), an interface layer (6) based on or incorporating a thermoplastic material compatible with the material of the secondary body (3),
**in that** it involves connecting said or each interface layer (6) to the main body (2) during a pre-assembly phase during the thermoforming or thermocompression operation of the section (4) of material, and
**in that** the welding operation is parameterized and configured, notably in terms of temperature, pressure and duration, to create a material join following plasticizing between the or each interface layer (6) and the related assembly zone (5') of the secondary body (3) in contact therewith.

2. Method according to Claim 1, **characterized in that** it involves fastening the or each interface layer (6) to the section (4) of material before the thermoforming or thermocompression step.

3. Method according to Claim 2, **characterized in that** the fastening before thermoforming of the or each interface layer (6) is a temporary or provisional fastening by simple contact, for example by bonding or coupling, that is enough to hold this layer or these layers (6) in position on the section (4) of material until permanent material connection thereof during the thermoforming or thermocompression step.

4. Method according to either of Claims 2 and 3, **characterized in that** the fastening before thermoforming of the or each interface layer (6) with the section (4) of material corresponds to a first phase or a preparatory phase for a two-phase permanent connection method for the layer or layers (6) with the section (4) completed during the thermoforming or thermocompression phase.

5. Method according to any one of Claims 1 to 4, **characterized in that** the section (4) of plate or sheet material forming the precursor or blank to be thermoformed or thermocompressed of the main body (2) comprises a portion of non-woven mat or felt made of a substantially uniform mixture of reinforcing fibres, preferably natural fibres, notably plant fibres, and fibres of thermoplastic material, notably polypropylene, and **in that** the or each interface layer (6) comprises a portion of non-woven felt or web cut to the shape of the related assembly zone (5) and made of fibres of thermoplastic material compatible with or similar to the thermoplastic material of the secondary body (3), and preferably having a degree of compatibility with the thermoplastic material of the main body (2) that is greater than that of the thermoplastic material of the secondary body (3).

6. Method according to any one of Claims 1 to 5, **characterized in that** the or each interface layer (6) is made of at least two materials, with a distribution of thermoplastic materials such that it defines firstly a first face (6') enabling, by plasticizing, the establishment of a good material join with the main body (2) even during the pre-assembly phase or a first phase of a connection method, and secondly a second face (6") enabling, by plasticizing, the establishment of a good material join with the secondary body (3) during the assembly phase.

7. Method according to either of Claims 5 and 6 where it is dependent on either of Claims 3 and 4, **characterized in that** the fastening before thermoforming between the or each interface layer (6) made of non-woven felt or web on one hand and the section (4) of non-woven mat or felt forming the blank of the main body (2) on the other hand is a fastening by mechanical connection obtained by needlepunching through the two superposed felts or webs or by mutual engagement of complementary formations printed in the two webs or felts.

8. Method according to any one of Claims 1 to 7, **characterized in that** it involves integrating into or attaching to the main body (2), at least at the or one of the assembly zones (5) thereof, at least one other intermediate layer having specific properties, for example a reinforcing, coupling or similar layer, this integration occurring before or during the thermoforming or thermocompression operation and the resulting additional intermediate layer or layers being positioned beneath the interface layer (6).

9. Method according to any one of Claims 1 to 8, **characterized in that** the or each interface layer (6) has, before execution of the thermoforming or thermocompression operation, a thickness of between 0.5 and 3.0 mm, preferably between 1 and 2 mm, and a weight of between 50 and 1000 g/mm², preferably between 100 and 500 g/mm².

10. Method according to any one of Claims 1 to 9, **characterized in that** the main body (2) corresponds to the substrate of a dashboard panel, and **in that** the or each secondary body (3) corresponds to the deployment channel of an airbag.

11. Dashboard panel provided with at least one airbag device, **characterized in that** it is made using the method of Claim 10, the substrate of the panel (2) and the body (3) forming the deployment channel of the or each airbag device being rigidly connected together in the assembly zones (5 and 5') with at least one interposed interface layer (6).
